# EUROPEAN PATENT APPLICATION

(11) **EP 4 769 809 A1**
(43) Date of publication of application: **01.07.2026**
(21) Application number: 24874930.1
(22) Date of filing: 30.09.2024
(51) Int. Cl.: H01M 50/531, H01M 50/533, H01M 50/54, H01M 10/0585, H01M 50/105, H01M 10/6554, H01M 10/613

(54) **UNIT CELL, SECONDARY BATTERY COMPRISING UNIT CELL, AND BATTERY MODULE COMPRISING SECONDARY BATTERY**

(30) Priority: 04.10.2023 KR 20230131839
(71) Applicant: LG Energy Solution, Ltd., Seoul 07335 (KR)
(72) Inventor: KIM, Jae Sung, Daejeon 34122 (KR)
(74) Representative: Plasseraud IP
(86) International application number: PCT/KR2024/014916
(87) International publication number: WO 2025/075374

(57) **Abstract**

The present disclosure relates to a unit cell, a secondary battery including the unit cell, and a battery module including the secondary battery, and a unit cell according to the present disclosure includes an electrode stack in which a first electrode, a separator, and a second electrode are alternately stacked; a first electrode tab extending from the first electrode; and a second electrode tab extending from the second electrode, wherein the first electrode and the second electrode are formed to have lengths greater than widths, the first electrode tab and the second electrode tab extend in the width direction of the first electrode and the second electrode, and two or more first electrode tabs are provided on the first electrode.

## Description

### TECHNICAL FIELD

### CROSS-REFERENCE TO RELATED APPLICATIONS

The present application claims priority to Korean Patent Application No. 10-2023-0131839 filed on October 4, 2023 in the Republic of Korea, the disclosures of which are incorporated herein by reference.

### TECHNICAL FIELD

The present disclosure relates to a unit cell, a secondary battery including the unit cell, and a battery module including the secondary battery.

### BACKGROUND ART

Secondary batteries are rechargeable unlike primary batteries, and have been heavily researched and developed in recent years due to their potential for miniaturization and large capacity. As the technology development and demand for mobile devices increase, the demand for secondary batteries as an energy source is rapidly increasing.

Secondary batteries are attracting much attention as an energy source not only for mobile devices such as mobile phones, digital cameras, and laptops, but also for power devices such as electric bicycles, electric vehicles, and hybrid electric vehicles. A small battery pack in which one battery cell is packed is used for small devices such as mobile phones and cameras, but a battery module in which two or more battery cells are connected in parallel and/or in series is used for medium and large devices such as laptops and electric vehicles.

Secondary batteries are classified into coin type batteries, cylindrical batteries, prismatic batteries, and pouch type batteries depending on the shape of a battery case. A secondary battery accommodates an electrode assembly and an electrolyte solution. In a secondary battery, the electrode assembly mounted inside the battery case is a power generating element that can be charged and discharged with a stacked structure of electrodes and separators.

The electrode assembly may be roughly classified into a jelly-roll type in which a sheet-like positive electrode and negative electrode coated with an active material having a separator interposed therebetween are wound, a stack type in which multiple positive electrodes and negative electrodes are sequentially stacked with a separator interposed therebetween, and a stack/folding type in which the stack-type unit cells are wound with a long separation film.

Recently, pouch-type batteries with a structure in which a stacked or stack/folding electrode assembly is embedded into a pouch-type battery case made of aluminum laminate sheets have attracted much attention and are gradually increasingly being used due to their low manufacturing cost, light weight, easy shape deformation, and the like.

Conventional pouch cells have tabs located on both sides. However, there is a problem in that the tab width is small compared to the cell width, which concentrates the current density, thereby increasing the heating value and causing the maximum cell temperature. And, as the tab width increases, the current density may be lowered, but there is a problem that it is limited to a small cell width or less. Additionally, due to the problem that the increase in the distance between the positive electrode tab and the negative electrode tab causes the distance for electron movement to increase, thereby increasing resistance and heating value, there is a disadvantage in that the increase in the cell temperature delays the fast charging time.

### SUMMARY

### TECHNICAL PROBLEM

The present disclosure is directed to providing a unit cell capable of improving the maximum temperature and temperature deviation of a cell, a secondary battery including the unit cell, and a battery module including the secondary battery.

### TECHNICAL SOLUTION

A unit cell according to an embodiment of the present disclosure may include an electrode stack in which a first electrode, a separator, and a second electrode are alternately stacked; a first electrode tab extending from the first electrode; and a second electrode tab extending from the second electrode, wherein the first electrode and the second electrode may be formed to have lengths greater than widths, the first electrode tab and the second electrode tab may extend in the width direction of the first electrode and the second electrode, and two or more first electrode tabs may be provided on the first electrode.

Additionally, a secondary battery according to an embodiment of the present disclosure may include an electrode assembly in which a plurality of unit cells according to an embodiment of the present disclosure are stacked; a pouch in which the electrode assembly is accommodated; a first electrode lead having one end connected to the first electrode tab and the other end extending to the outside of the pouch; and a second electrode lead having one end connected to the second electrode tab and the other end extending to the outside of the pouch, wherein ends of the first electrode tabs and the second electrode tabs of the plurality of stacked unit cells may be each provided in a tab collection form.

In addition, a battery module according to an embodiment of the present disclosure may include a battery stack in which a plurality of secondary batteries according to an embodiment of the present disclosure are stacked along a third direction, which is the stacking direction of the electrode stack; and a cooling unit positioned in a part of the battery stack to cool the secondary battery, wherein the part may be positioned on a side opposite to the side where the first electrode tab and the second electrode tab are positioned based on the secondary battery.

### ADVANTAGEOUS EFFECTS

According to the present disclosure, the first electrode tab and the second electrode tab extend in the width direction of the first electrode and the second electrode formed to have lengths greater than widths, and two or more first electrode tabs are provided within the first electrode, so that the distance between the tabs may be shortened, thereby reducing the resistance and suppressing an increase in temperature. As a result, the first electrode tab and the second electrode tab extend in the width direction of the first electrode and the second electrode, and it is possible to form the tab width to be large, so that the current density may be lowered and the resistance may be reduced.

Additionally, the plurality of first electrode tabs and the plurality of second electrode tabs protrude in a direction parallel to each other on one side of the four sides of the electrode stack in which the first electrode, the separator, and the second electrode are alternately stacked, so that the current inside the unit cell flows in at least three directions, thereby significantly lowering the current density, and the resistance inside the unit cell is significantly reduced, thereby significantly lowering the heating value and the cell temperature.

In addition, the plurality of first electrode tabs and the plurality of second electrode tabs are alternately positioned along one side of the four sides of the electrode stack, so that the resistance within the unit cell may be more significantly reduced, thereby more significantly lowering the heating value and the cell temperature.

### BRIEF DESCRIPTION OF THE DRAWINGS

FIG. 1 is a plan view showing a unit cell according to an embodiment of the present disclosure.
FIG. 2 is an exploded perspective view showing a unit cell according to an embodiment of the present disclosure.
FIG. 3 is a side cross-sectional view showing a principal part of a secondary battery according to an embodiment of the present disclosure.
FIG. 4 is a plan view showing a secondary battery according to an embodiment of the present disclosure.
FIG. 5 is a plan view showing a battery module according to an embodiment of the present disclosure.
FIG. 6 is a perspective view showing a battery module according to an embodiment of the present disclosure.
FIG. 7 is an image showing an experimental result of temperature distribution according to electrical resistance in a unit cell according to Manufacturing Example 1.
FIG. 8 is an image showing an experimental result of temperature distribution according to electrical resistance in a unit cell according to Manufacturing Example 2.
FIG. 9 is an image showing an experimental result of temperature distribution according to electrical resistance in a unit cell according to Comparative Example 1.
FIG. 10 is an image showing an experimental result of temperature distribution according to electrical resistance in a unit cell according to Comparative Example 2.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

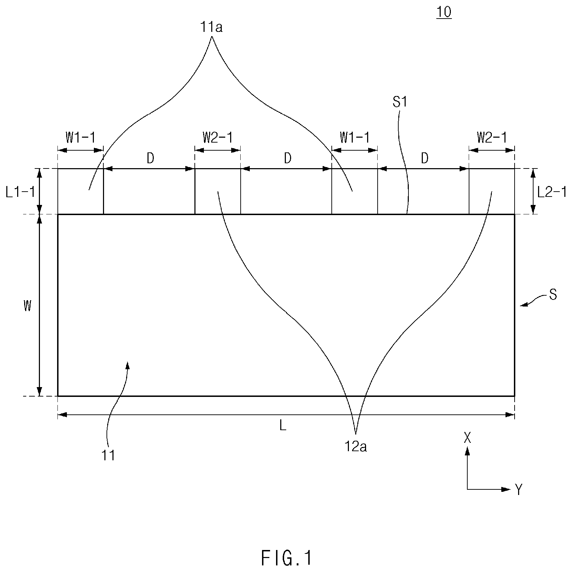

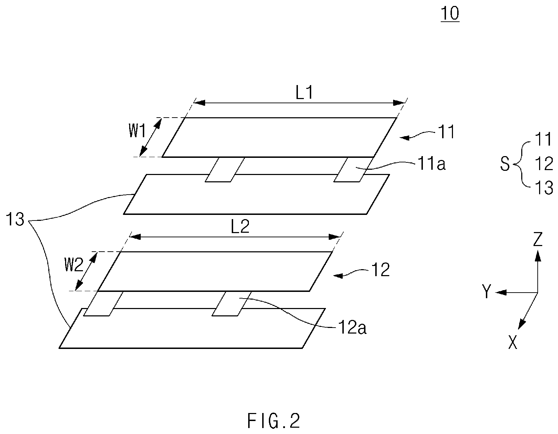

FIG. 1 is a plan view showing a unit cell according to an embodiment of the present disclosure, and FIG. 2 is an exploded perspective view showing a unit cell according to an embodiment of the present disclosure.

Referring to FIGS. 1 and 2, a unit cell 10 according to an embodiment of the present disclosure includes an electrode stack S in which a first electrode 11, a separator 13, and a second electrode 12 are alternately stacked; a first electrode tab 11a extending from the first electrode 11; and a second electrode tab 11b extending from the second electrode 12, wherein the first electrode 11 and the second electrode 12 are formed to have lengths L1, L2 greater than widths W1, W2, and the first electrode tab 11a and the second electrode tab 12a extend in the width direction of the first electrode 11 and the second electrode 12.

In the electrode stack S, at least one first electrode 11, at least one separator 13, and at least one second electrode 12 are alternately stacked. In this case, in the electrode stack S, the first electrode 11, the separator 13, and the second electrode 12 may be sequentially stacked to correspond to each other in a third direction Z, which is the stacking direction.

Additionally, the electrode stack S may be formed in a rectangular shape on a plane. The electrode stack S is formed to have a length L greater than a width W.

Here, the first electrode 11 and the second electrode 12 may be a positive electrode and a negative electrode, or a negative electrode and a positive electrode.

The first electrode 11 is formed to have a length L2 greater than a width W1. In this case, the first electrode 11 may be formed, for example, in a rectangular shape.

Additionally, the first electrode 11 may include a first electrode current collector and a first electrode active material laminated on one surface or both surfaces of the first electrode current collector.

The first electrode tab 11a extends from the first electrode 11 in the width direction of the first electrode 11.

In this case, the width direction of the first electrode 11 may be a first direction X, and the length direction of the first electrode 11 may be a second direction Y. Here, the first direction X and the second direction Y may be perpendicular to each other on a plane.

Additionally, the first electrode tab 11a may protrude, for example, in a quadrilateral shape. That is, the first electrode tab 11a may protrude from the first electrode 11 in the width direction of the first electrode 11.

In addition, the first electrode tab 11a may be provided in plurality on the first electrode 11. That is, two or more first electrode tabs 11a may be provided on the first electrode 11. In this case, the first electrode tab 11a may be provided in two pieces on the first electrode 11, for example.

And, the first electrode tab 11a may be formed of the same material as the first electrode current collector of the first electrode 11.

The second electrode 12 is formed to have a length L2 greater than a width W2. In this case, the second electrode 12 may be formed, for example, in a rectangular shape.

Additionally, the second electrode 12 may include a second electrode current collector and a second electrode active material laminated on one surface or both surfaces of the second electrode current collector.

The second electrode tab 11b extends from the second electrode 12 in the width direction of the second electrode 12.

In this case, the width direction of the second electrode 12 may be a first direction X, and the length direction of the second electrode 12 may be a second direction Y. Here, the first direction X and the second direction Y may be perpendicular to each other on a plane.

Additionally, the second electrode tab 11b may protrude, for example, in a quadrilateral shape. That is, the second electrode tab 11b may protrude from the second electrode 12 in the width direction of the second electrode 12.

In addition, the second electrode tab 12a may be provided in plurality on the second electrode 12. That is, two or more second electrode tabs 12a may be provided on the second electrode 12. In this case, the second electrode tab 12a may be provided in two pieces on the second electrode 12, for example.

And, the second electrode tab 11b may be formed of the same material as the second electrode current collector of the second electrode 12.

The first electrode tab 11a and the second electrode tab 12a may protrude in a direction parallel to each other on one side S1 of the four sides of the electrode stack S.

The plurality of first electrode tabs 11a and the plurality of second electrode tabs 12a may be alternately positioned along one side S1 of the four sides of the electrode stack S.

Any one first electrode tab 11a of the plurality of first electrode tabs 11a may be positioned at one end of one side S1 of the four sides of the electrode stack S, and any one second electrode tab 12a of the plurality of second electrode tabs 12a may be positioned at the other end of one side S1 of the four sides of the electrode stack S.

The plurality of first electrode tabs 11a and the plurality of second electrode tabs 12a may be positioned to be spaced apart from each other at regular intervals D. In this case, the plurality of first electrode tabs 11a and the plurality of second electrode tabs 12a may be positioned to be spaced apart from each other at the same interval D.

The first electrode tab 11a and the second electrode tab 12a may have the same lengths L1-1, L2-1 protruding in the first direction X, which is the width direction of the electrode stack S, and the first electrode tab 11a and the second electrode tab 12a may have the same widths W1-1, W2-1 formed in the second direction Y, which is the length direction of the electrode stack S.

Meanwhile, for example, the lengths L1, L2 of the first electrode 11 and the second electrode 12 may have a ratio of 1.3 or more to the widths W1, W2. Accordingly, the lengths L1, L2 of the first electrode 11 and the second electrode 12 are formed to have a ratio of 1.3 or more to the widths W1, W2, so that there is an effect of reducing temperature and resistance. And, specifically, for example, the lengths L1, L2 of the first electrode 11 and the second electrode 12 may have a ratio of 1.3 to 5.4 to the widths W1, W2.

In a plan view, the ratio of the width W1-1 of the first electrode tab 11a in the second direction Y perpendicular to the first direction X to the width W1 of the first electrode 11 in the first direction X, and the ratio of the width W2-1 of the second electrode tab 12a in the second direction Y perpendicular to the first direction X to the width W2 of the second electrode 12 in the first direction X may be 0.05 to 0.15, respectively.

Accordingly, the ratios of the width W1-1 of the first electrode tab 11a and the width W2-1 of the second electrode tab 12a in the second direction Y perpendicular to the first direction X to the widths W1, W2 of the first electrode 11 and the second electrode 12 in the first direction X are formed to be equal to or more than 0.05, which is the minimum value, respectively, so that there is an effect of reducing resistance and temperature. Additionally, the ratios of the width W1-1 of the first electrode tab 11a and the width W2-1 of the second electrode tab 12a in the second direction Y perpendicular to the first direction X to the widths W1, W2 of the first electrode 11 and the second electrode 12 in the first direction X are formed to be equal to or less than 0.15, which is the maximum value, respectively, so that interference between the electrode tabs may be prevented.

Meanwhile, the number of the plurality of first electrode tabs 11a and the plurality of second electrode tabs 12a extending from the first electrode 11 and the second electrode 12 may be the same. In this case, for example, the number of the plurality of first electrode tabs 11a and the plurality of second electrode tabs 12a may be two each. Accordingly, direct connection may be possible by arranging one type of cell at an intersection.

In the unit cell 10 according to an embodiment of the present disclosure configured as described above, the first electrode tab 11a and the second electrode tab 12a extend in the width direction of the first electrode 11 and the second electrode 12 formed to have lengths L1, L2 greater than widths W1, W2, and two or more first electrode tabs 11a are provided within the first electrode 11, so that the distance between the tabs may be shortened, thereby reducing the resistance and suppressing an increase in temperature. As a result, the first electrode tab 11a and the second electrode tab 12a extend in the width direction of the first electrode 11 and the second electrode 12, and it is possible to form the tab width to be large, so that the current density may be lowered and the resistance may be reduced.

Additionally, in the unit cell 10 according to an embodiment of the present disclosure, the plurality of first electrode tabs 11a and the plurality of second electrode tabs 12a protrude in a direction parallel to each other on one side S1 of the four sides of the electrode stack S in which the first electrode 11, the separator 13, and the second electrode 12 are alternately stacked, so that the current inside the unit cell 10 flows in at least three directions, thereby significantly lowering the current density, and the resistance inside the unit cell 10 is significantly reduced, thereby significantly lowering the heating value and the cell temperature.

In addition, in the unit cell 10 according to an embodiment of the present disclosure, the plurality of first electrode tabs 11a and the plurality of second electrode tabs 12a are alternately positioned along one side S1 of the four sides of the electrode stack S, so that the resistance within the unit cell 10 may be more significantly reduced, thereby more significantly lowering the heating value and the cell temperature.

Hereinafter, a secondary battery according to an embodiment of the present disclosure will be described.

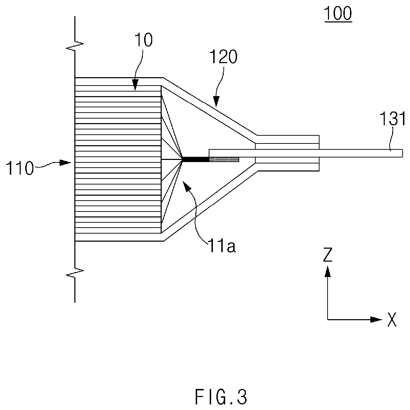

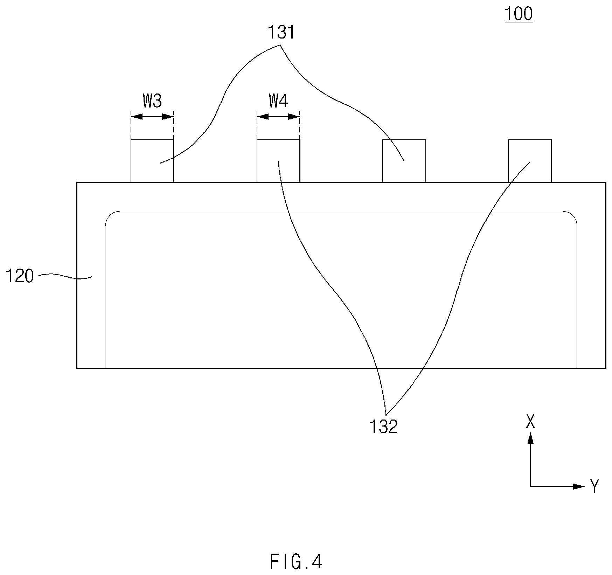

FIG. 3 is a side cross-sectional view showing a principal part of a secondary battery according to an embodiment of the present disclosure, and FIG. 4 is a plan view showing a secondary battery according to an embodiment of the present disclosure.

Referring to FIGS. 3 and 4, a secondary battery 100 according to an embodiment of the present disclosure includes an electrode assembly 110 in which a plurality of unit cells 10 are stacked, a pouch 120 in which the electrode assembly 110 is accommodated, a first electrode lead 131 having one end connected to the first electrode tab 11a and the other end extending to the outside of the pouch 120, and a second electrode lead 132 having one end connected to the second electrode tab 11b and the other end extending to the outside of the pouch 120.

The secondary battery 100 according to an embodiment of the present disclosure relates to a secondary battery 100 including a unit cell 10 according to the above-described embodiment. Therefore, this embodiment is to be described by omitting or briefly describing the content overlapping with the above-described embodiment and focusing on differences.

More specifically, referring to FIGS. 2 to 4, in the secondary battery 100 according to an embodiment of the present disclosure, the electrode assembly 110 is a power generating element that can be charged and discharged in which a plurality of unit cells 10 are stacked.

The unit cell 10 includes an electrode stack S in which at least one first electrode 11, at least one separator 13, and at least one second electrode 12 are alternately stacked, a first electrode tab 11a extending from the first electrode 11, and a second electrode tab 11b extending from the second electrode 12, wherein the first electrode 11 and the second electrode 12 are formed to have lengths L1, L2 greater than widths W1, W2, and the first electrode tab 11a and the second electrode tab 12a extend in the width direction of the first electrode 11 and the second electrode 12 (see FIG. 1).

The first electrode tab 11a may be provided in plurality on the first electrode 11. That is, two or more first electrode tabs 11a may be provided on the first electrode 11. In this case, the first electrode tab 11a may be provided in two pieces on the first electrode 11, for example.

The second electrode tab 12a may be provided in plurality on the second electrode 12. That is, two or more second electrode tabs 12a may be provided on the second electrode 12. In this case, the second electrode tab 12a may be provided in two pieces on the second electrode 12, for example.

Meanwhile, ends of the first electrode tabs 11a and the second electrode tabs 11b of the plurality of stacked unit cells 10 may be each provided in a tab collection form.

The pouch 120 may have a receiving portion formed therein to accommodate the electrode assembly 110. The pouch 120 may include, for example, an aluminum sheet and a resin layer coated on both surfaces of the aluminum sheet.

The first electrode lead 131 may have one end connected to the first electrode tab 11a and the other end extending to the outside of the pouch 120. Additionally, the first electrode lead 131 may be welded to an end of the first electrode tab 11a provided in a tab collection. The width W1-1 of the first electrode tab 11a and the width W3 of the first electrode lead 131 may be the same.

The second electrode lead 132 may have one end connected to the second electrode tab 11b and the other end extending to the outside of the pouch 120. Additionally, the second electrode lead 132 may be welded to an end of the second electrode tab 11b provided in a tab collection. The width W2-1 of the second electrode tab 11b and the width W4 of the second electrode lead 132 may be provided to be the same.

Hereinafter, a battery module according to an embodiment of the present disclosure will be described.

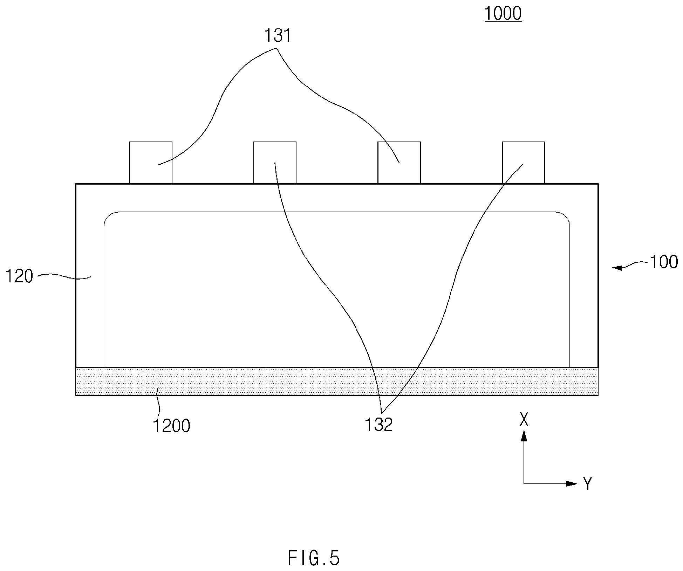

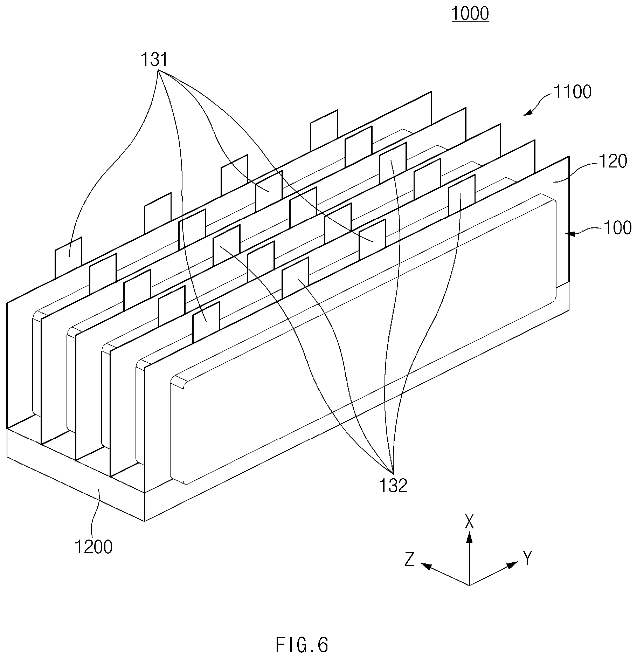

FIG. 5 is a plan view showing a battery module according to an embodiment of the present disclosure, and FIG. 6 is a perspective view showing a battery module according to an embodiment of the present disclosure.

Referring to FIGS. 5 and 6, a battery module 1000 according to an embodiment of the present disclosure includes a battery stack 1100 in which a plurality of secondary batteries 100 are stacked along a third direction Z, and a cooling unit 1200 positioned in a part of the battery stack 1100 to cool the secondary battery 100.

The battery module 1000 according to an embodiment of the present disclosure relates to a battery module 1000 including a secondary battery 100 according to the above-described embodiment. Therefore, this embodiment is to be described by omitting or briefly describing the content overlapping with the above-described embodiment and focusing on differences.

More specifically, referring to FIGS. 2, 5, and 6, in the battery module 1000 according to an embodiment of the present disclosure, the battery stack 1100 is stacked with a plurality of secondary batteries 100 along a third direction Z, which is the stacking direction of the electrode stack S. Here, the third direction Z may be the stacking direction of the electrode stack S in which the first electrode 11, the separator 13, and the second electrode 12 are alternately stacked.

The secondary battery 100 may include an electrode assembly 110 in which a plurality of unit cells 10 are stacked, a pouch 120 in which the electrode assembly 110 is accommodated, a first electrode lead 131 having one end connected to the first electrode tab 11a and the other end extending to the outside of the pouch 120, and a second electrode lead 132 having one end connected to the second electrode tab 11b and the other end extending to the outside of the pouch 120.

The unit cell 10 includes an electrode stack S in which at least one first electrode 11, at least one separator 13, and at least one second electrode 12 are alternately stacked, a first electrode tab 11a extending from the first electrode 11, and a second electrode tab 11b extending from the second electrode 12, wherein the first electrode 11 and the second electrode 12 are formed to have lengths L1, L2 greater than widths W1, W2, and the first electrode tab 11a and the second electrode tab 12a extend in the width direction of the first electrode 11 and the second electrode 12 (see FIG. 1).

The first electrode tab 11a may be provided in plurality on the first electrode 11. That is, two or more first electrode tabs 11a may be provided on the first electrode 11. In this case, the first electrode tab 11a may be provided in two pieces on the first electrode 11, for example.

The second electrode tab 12a may be provided in plurality on the second electrode 12. That is, two or more second electrode tabs 12a may be provided on the second electrode 12. In this case, the second electrode tab 12a may be provided in two pieces on the second electrode 12, for example.

The cooling unit 1200 may be positioned in a part of the battery stack 1100 to cool the secondary battery 100.

Here, the part may be positioned on a side opposite to the side where the first electrode tab 11a and the second electrode tab 12a are positioned based on the secondary battery 100. In this case, the first electrode tab 11a and the second electrode tab 12a may be positioned on the upper side based on the secondary battery 100, and the cooling unit 1200 may be positioned on the lower side.

The cooling unit 1200 may include a cooling plate positioned on the lower side of the battery stack 1100.

Meanwhile, the battery module 1000 according to an embodiment of the present disclosure may further include a module case that accommodates the battery stack 1100 and the cooling unit 1200 therein. And, the battery module 1000 according to an embodiment of the present disclosure may be configured to further include a busbar that electrically connects a plurality of secondary batteries 100 stacked on each other and the first electrode leads 131 and the second electrode leads 132 of the plurality of secondary batteries 100.

### <Manufacturing Example 1>

A unit cell including an electrode stack in which a positive electrode, a separator, and a negative electrode are alternately stacked, a positive electrode tab extending from the positive electrode, and a negative electrode tab extending from the negative electrode was manufactured.

Additionally, the positive electrode and the negative electrode were formed to have lengths greater than widths. Two positive electrode tabs were formed on the positive electrode, and two negative electrode tabs were formed on the negative electrode. The positive electrode tabs and the negative electrode tabs were formed to protrude in a direction parallel to each other on one side of the four sides of the electrode stack.

In addition, the two positive electrode tabs were positioned on the left side of one side of the four sides of the electrode stack, and the two negative electrode tabs were positioned on the right side of one side of the four sides of the electrode stack.

### <Manufacturing Example 2>

A unit cell was manufactured in the same manner as in Manufacturing Example 1, except that the two positive electrode tabs and the two negative electrode tabs were alternately positioned along one side of the four sides of the electrode stack.

### <Comparative Example 1>

A unit cell was manufactured in the same manner as in Manufacturing Example 1, except that one positive electrode tab and one negative electrode tab were positioned on both sides of the electrode stack in the length direction.

### <Comparative Example 2>

A unit cell was manufactured in the same manner as in Manufacturing Example 1, except that two positive electrode tabs and two negative electrode tabs were positioned on both sides of the electrode stack in the length direction.

### <Experimental Example 1>

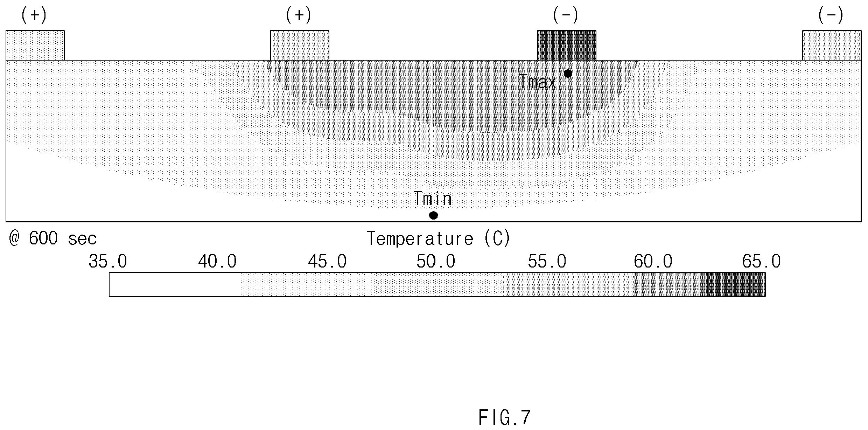

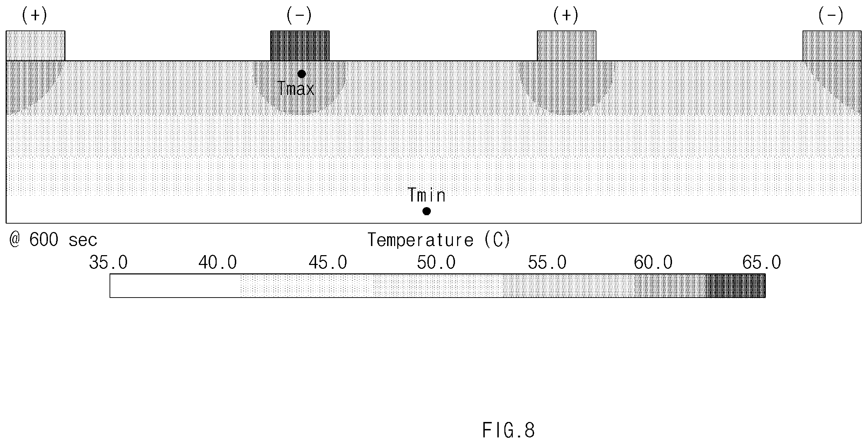

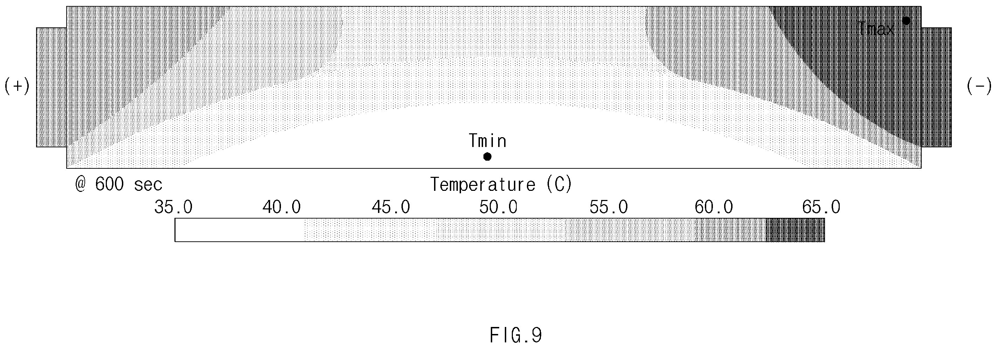

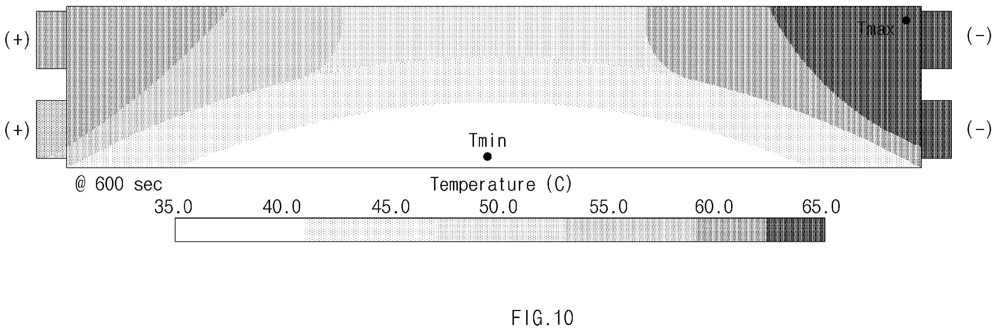

FIG. 7 is an image showing an experimental result of temperature distribution according to electrical resistance in a unit cell according to Manufacturing Example 1, FIG. 8 is an image showing an experimental result of temperature distribution according to electrical resistance in a unit cell according to Manufacturing Example 2, FIG. 9 is an image showing an experimental result of temperature distribution according to electrical resistance in a unit cell according to Comparative Example 1, and FIG. 10 is an image showing an experimental result of temperature distribution according to electrical resistance in a unit cell according to Comparative Example 2. Here, the experimental results of FIGS. 7 to 10 are simulation analysis results.

The temperature distributions of the unit cells according to Manufacturing Example 1, Manufacturing Example 2, Comparative Example 1, and Comparative Example 2 are shown as images in FIGS. 7 to 10. At this time, in the temperature distribution images of Manufacturing Examples 1 and 2 and Comparative Examples 1 and 2 shown in FIGS. 7 to 10, the part with a high temperature is shown dark and the part with a low temperature is shown bright, which displays light and shade.

The unit cell was charged at a 3 C rate for 600 seconds, and the lower portion of the unit cell was cooled. Experiments were conducted at an initial temperature of 25 °C, a cooling temperature of 25 °C, and a cooling heat exchange coefficient of 500 W/mK, and the results are shown in FIGS. 7 to 10.

It can be seen that the temperature distribution of Manufacturing Example 1 shown in FIG. 7 and Manufacturing Example 2 shown in FIG. 8 shows uniform and low temperatures, whereas the temperature distribution of Comparative Example 1 shown in FIG. 9 and Comparative Example 2 shown in FIG. 10 shows uneven and high temperatures. Therefore, in the electrode stack where the positive electrode and the negative electrode having lengths greater than widths are stacked, it can be seen that the current density is lowered and the resistance is reduced in Manufacturing Examples 1 and 2, in which the positive electrode tabs and the negative electrode tabs are provided in the width direction, than in Comparative Examples 1 and 2, in which the positive electrode tabs and the negative electrode tabs are provided on both sides in the length direction.

And, it can be seen that the temperature distribution of Manufacturing Example 2 shown in FIG. 8 shows more uniform and lower temperatures than that of Manufacturing Example 1 shown in FIG. 7. Therefore, it can be seen that the current density is lowered and the resistance is reduced in Manufacturing Example 2, in which the two positive electrode tabs and the two negative electrode tabs are alternately positioned, respectively, along one side of the four sides of the electrode stack, than in Manufacturing Example 1, in which the two positive electrode tabs and the two negative electrode tabs are alternately positioned along one side of the four sides of the electrode stack.

In particular, in the electrode stack where the positive electrode and the negative electrode having lengths greater than widths are stacked, it can be seen that the current density is significantly lowered and the resistance is significantly reduced in Manufacturing Example 2, in which a plurality of first electrode tabs and a plurality of second electrode tabs extending in the width direction are alternately positioned along one side of the four sides of the electrode stack.

### <Experimental Example 2>

After applying a current to the unit cells according to Manufacturing Example 1, Manufacturing Example 2, Comparative Example 1, and Comparative Example 2, the resistance was measured 10 seconds later and is shown in Table 1. The initial temperature, cooling temperature, cooling heat exchange coefficient, and the like were applied in the same manner as in Experimental Example 1. In Table 1, the resistance of the electrode current collector portion in the electrode of the unit cell was measured and the average value was shown. The resistance listed in Table 1 is the ohmic resistance of the electrode current collector (foil).

**[Table1]**

| | Resistance at 10 Seconds [mΩ] |
|---|---|
| Manufacturing Example 1 | 0.2 |
| Manufacturing Example 2 | 0.11 |
| Comparative Example 1 | 0.47 |
| Comparative Example 2 | 0.46 |

The resistance of Comparative Example 1 was 0.47 mΩ and the resistance of Comparative Example 2 was 0.46 mΩ, which showed a high resistance, whereas the resistance of Manufacturing Example 1 was 0.2 mΩ, and the resistance of Manufacturing Example 2 was 0.11 mΩ, which showed a low resistance. Therefore, in the electrode stack where the positive electrode and the negative electrode having lengths greater than widths are stacked, it can be seen that the resistance was reduced in Manufacturing Examples 1 and 2, in which the positive electrode tabs and the negative electrode tabs are provided in the width direction, than in Comparative Examples 1 and 2, in which the positive electrode tabs and the negative electrode tabs are provided on both sides in the length direction. And, it can be seen that the resistance of Manufacturing Example 2 was lower than that of Manufacturing Example 1. Therefore, it can be seen that the resistance is reduced in Manufacturing Example 2, in which the two positive electrode tabs and the two negative electrode tabs are alternately positioned, respectively, along one side of the four sides of the electrode stack, than in Manufacturing Example 1, in which the two positive electrode tabs and the two negative electrode tabs are alternately positioned along one side of the four sides of the electrode stack.

In particular, in the electrode stack where the positive electrode and the negative electrode having lengths greater than widths are stacked, it can be seen that the resistance is significantly reduced in Manufacturing Example 2, in which a plurality of first electrode tabs and a plurality of second electrode tabs extending in the width direction are alternately positioned along one side of the four sides of the electrode stack.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10: Unit cell
11: First electrode
11a: First electrode tab
12: Second electrode
12a: Second electrode tab
13: Separator
100: Secondary battery
110: Electrode assembly
120: Pouch
131: First electrode lead
132: Second electrode lead
1000: Battery module
1100: Battery stack
1200: Cooling unit
S: Electrode stack
X: First direction
Y: Second direction
Z: Third direction

## Claims

1. A unit cell comprising:
an electrode stack in which a first electrode, a separator, and a second electrode are alternately stacked;
a first electrode tab extending from the first electrode; and
a second electrode tab extending from the second electrode,
wherein the first electrode and the second electrode are formed to have lengths greater than widths,
the first electrode tab and the second electrode tab extend in the width direction of the first electrode and the second electrode, and
two or more first electrode tabs are provided on the first electrode.

2. The unit cell according to claim 1,
wherein the first electrode tab and the second electrode tab protrude in a direction parallel to each other on one side of the four sides of the electrode stack.

3. The unit cell according to claim 2,
wherein the electrode stack is formed in a rectangular shape, and
the first electrode tab and the second electrode tab protrude in a quadrilateral shape.

4. The unit cell according to claim 2,
wherein each of the first electrode tab and the second electrode tab is provided in plurality.

5. The unit cell according to claim 4,
wherein the plurality of first electrode tabs and the plurality of second electrode tabs are alternately positioned along one side of the four sides of the electrode stack.

6. The unit cell according to claim 5,
wherein any one first electrode tab of the plurality of first electrode tabs is positioned at one end of one side of the four sides of the electrode stack, and any one second electrode tab of the plurality of second electrode tabs is positioned at the other end of one side of the four sides of the electrode stack.

7. The unit cell according to claim 5,
wherein the plurality of first electrode tabs and the plurality of second electrode tabs are positioned to be spaced apart from each other at regular intervals.

8. The unit cell according to claim 5,
wherein the first electrode tab and the second electrode tab have the same length protruding in a first direction, which is the width direction of the electrode stack, and
the first electrode tab and the second electrode tab have the same width formed in a second direction, which is the length direction of the electrode stack.

9. The unit cell according to claim 8,
wherein in a plan view, the ratio of the width of the first electrode tab in the second direction perpendicular to the first direction to the width of the first electrode in the first direction, and the ratio of the width of the second electrode tab in the second direction perpendicular to the first direction to the width of the second electrode in the first direction are 0.05 to 0.15, respectively.

10. A secondary battery comprising:
an electrode assembly in which a plurality of unit cells described in any one of claims 1 to 9 are stacked;
a pouch in which the electrode assembly is accommodated;
a first electrode lead having one end connected to the first electrode tab and the other end extending to the outside of the pouch; and
a second electrode lead having one end connected to the second electrode tab and the other end extending to the outside of the pouch,
wherein ends of the first electrode tabs and the second electrode tabs of the plurality of stacked unit cells are each provided in a tab collection form.

11. The secondary battery according to claim 10,
wherein the first electrode tab and the first electrode lead are provided to have the same width, and
the second electrode tab and the second electrode lead are provided to have the same width.

12. A battery module comprising:
a battery stack in which a plurality of secondary batteries described in claim 10 are stacked along a third direction, which is the stacking direction of the electrode stack; and
a cooling unit positioned in a part of the battery stack to cool the secondary battery,
wherein the part is positioned on a side opposite to the side where the first electrode tab and the second electrode tab are positioned based on the secondary battery.
